# EUROPÄISCHE PATENTSCHRIFT

(11) **EP 1 317 130 B1**
(45) Veröffentlichungstag und Bekanntmachung des Hinweises auf die Patenterteilung: **25.03.2009**
(21) Anmeldenummer: 02026136.8
(22) Anmeldetag: 23.11.2002
(51) Int. Cl.: H04N 1/21

(54) **Tragbares Bildsignalbearbeitungsgerät**
Portable image processing device
Dispositif portatif de traitement d'images

(30) Priorität: 30.11.2001 DE 10158829
(43) Veröffentlichungstag der Anmeldung: 04.06.2003
(73) Patentinhaber: Grundig Multimedia B.V., 1083 HJ Amsterdam (NL)
(72) Erfinder: Horn, Bernhard, 91301 Forchheim (DE)
(74) Vertreter: Pröll, Jürgen

(56) Entgegenhaltungen:
- US-A1- 2001 010 550
- GONZALEZ R.C.; WINTZ P.: "DIGITAL IMAGE PROCESSING." 1987, ADDISON WESLEY , READING, US 020118 , XP002293421 * Seite 6 - Seite 11 *

## Beschreibung

Die Erfindung betrifft ein tragbares Bildsignalbearbeitungsgerät.

Es sind bereits Digitalkameras bekannt. Diese speichern die aufgenommenen und in der Regel komprimierten Bildsignaldaten mittels einer in der Digitalkamera befindlichen Speicherkarte. Heute übliche Speicherkarten, die bereits kleiner sind als Scheckkarten, sind beispielsweise eine Smart Media Card, ein Compact Flash, ein Micro Drive bzw. eine Mini-Harddisk, eine Multimediakarte (MMC), ein SD-Karte oder ein von der Firma Sony herausgegebener Memory Stick.

Es ist üblich, derartige Karten unter Verwendung von Lesegeräten an einen Personalcomputer anzuschließen und dann die auf der jeweiligen Karte abgespeicherten Bildsignaldaten in den Personalcomputer einzulesen. Typischerweise ist ein derartiges Lesegerät dazu in der Lage, maximal zwei verschiedene Kartentypen aufnehmen und die dort gespeicherten Daten auslesen zu können.

Für Personalcomputer sind am Markt verschiedene Anwendungsprogramme käuflich erwerbbar, mittels derer jeweils einem bestimmten Kartentyp zugehörige Bildsignale bearbeitet werden können. Mittels der genannten Anwendungsprogramme können bearbeitete Bildsignale abgespeichert und Bildsignalarchive generiert werden. Die abgespeicherten Daten können auch wieder auf einer Speicherkarte abgelegt und auf einem Bildschirm der Kamera selbst angesehen werden.

Es ist ebenfalls bereits bekannt, die bearbeiteten Bilder vom Personalcomputer aus über das Internet oder eine Standard-Modemverbindung an einen Belichtungsservice zu schicken oder in Internet-Seiten einzusetzen. Die bearbeiteten Bilder können auch an einen Serviceanbieter übertragen werden, bei welchem die Bilder archiviert werden.

Aus US-2001/0010550-A1 ist eine elektronische Kamera offenbart, welche über Daten Schnittstellen mit einem PC verbindbar ist und vom PC die in der Kamera gespeicherten Daten übertragen werden können.

Die Aufgabe der Erfindung besteht darin, einen Weg aufzuzeigen, wie man auf einfache Weise Bildsignaldaten selbstständig verändern und mehreren Personen gleichzeitig präsentieren kann.

Diese Aufgabe wird durch ein tragbares Bildsignalbearbeitungsgerät mit den im Anspruch 1 angegebenen Merkmalen gelöst. Vorteilhafte Ausgestaltungen und Weiterbildungen der Erfindung ergeben sich aus den abhängigen Ansprüchen.

Durch die Erfindung wird ein eigenständiges, tragbares Bildsignalbearbeitungsgerät geschaffen, welches dazu in der Lage ist, Bildsignaldaten von einem Datenträger, bei dem es sich vorzugsweise um eine Speicherkarte handelt, zu lesen, das Datenformat der gelesenen Bildsignaldaten zu identifizieren, die identifizierten Bildsignaldaten in gewünschter Weise zu bearbeiten und auf einem Display darzustellen.

Bei diesem Display kann es sich um ein Display handeln, welches integrierter Bestandteil des Bildsignalbearbeitungsgerätes ist. In diesem Fall wird kein externes Display zur Präsentation der bearbeiteten Bildsignaldaten benötigt. Die Anzahl der Personen, denen die bearbeiteten Bildsignaldaten präsentiert werden können, ist bei dieser Lösung vergleichsweise klein.

Alternativ dazu kann es sich bei dem Display auch um den Bildschirm eines an das tragbare Bildsignalbearbeitungsgerät angeschlossenen Fernsehgerätes handeln. Zur Darstellung der im Bildsignalbearbeitungsgerät bearbeiteten Bilder muss in diesem Fall lediglich das Bildsignalbearbeitungsgerät mittels eines geeigneten Kabels an das Fernsehgerät angeschlossen werden. Bei zukünftigen Gerätegenerationen kann der Anschluss des Bildsignalbearbeitungsgerätes an das Fernsehgerät auch drahtlos erfolgen, beispielsweise unter Anwendung der sogenannten Bluetooth-Technologie.

Vorzugsweise weist ein tragbares Bildsignalbearbeitungsgerät gemäß der Erfindung einen Bildsignaldaten-Dekomprimierer auf. Dadurch wird dem Umstand Rechnung getragen, dass die von einem Datenträger gelesenen Bildsignaldaten in vielen Fällen komprimiert sind. Wird mittels der Identifikationseinheit erkannt, dass komprimierte Daten vorliegen, dann werden diese über den Bildsignaldaten-Dekomprimierer geleitet. Wird mittels der Identifikationseinheit erkannt, dass keine komprimierten Daten vorliegen, dann wird der Bildsignaldaten-Dekomprimierer umgangen.

Die Verwendung eines Speichers, wie er im Anspruch 4 angegeben ist, erlaubt auch eine Abspeicherung und Bearbeitung von Videosequenzen, die aus einer Vielzahl von aufeinanderfolgenden Einzelbildern bestehen.

Mittels der Bildsignalbearbeitungseinheit ist eine Vielzahl von verschiedenen Bildinhaltsveränderungen durchführbar. Welche Bildinhaltsveränderung jeweils gewünscht ist, kann in vorteilhafter Weise vom Benutzer mittels der Bedieneinheit des Gerätes vorgegeben werden. Als Bedieneinheit wird eine Fernbedienung und/oder ein berührungssensitiver Bildschirm verwendet.

In vorteilhafter Weise kann dem bearbeiteten Bildsignal auch ein mittels eines Ton-Synthesizers erzeugtes Tonsignal oder auch ein über einen Mikrofoneingang oder einen Audiosignaleingang zugeführtes Audiosignal zugeordnet werden.

In vorteilhafter Weise weist das Bildsignalbearbeitungsgerät ein Modem auf, welches mit einem Telefonanschluss des Gerätes verbunden ist. Dadurch wird die Möglichkeit geschaffen, auch bidirektional mit dem Internet zu kommunizieren und auch bearbeitete Bildsignaldaten an externe Partner, beispielsweise einen Belichtungsservice, zu übertragen.

Auch eine Übertragung der bearbeiteten Bildsignale über eine Ausgangsbuchse an einen externen Speicher 17 ist möglich. Weiterhin können die bearbeiteten Daten auch wieder an einen Datenträger zurückübertragen werden, der in einem der Datenträgereinführschlitze des Gerätes positioniert ist, und dort abgespeichert werden.

Um dem Benutzer die Bedienung des Gerätes zu vereinfachen, ist in vorteilhafter Weise eine menügeführte Eingabe von Bedienbefehlen vorgesehen. Zu diesem Zweck dient das geräteinterne Display und/oder das externe Display zur Darstellung von Benutzerführungssignalen. Diese werden vorzugsweise in Form eines Auswahlmenüs dargestellt, aus welchem mittels der Bedieneinheit oder durch eine Touchscreen-Eingabe durchzuführende Bedienbefehle auswählbar sind. Vorzugsweise ist die Platzierung der Benutzerführungssignale auf dem Display veränderbar, so dass gewünschte Teile des Bildes nicht verdeckt werden. Zu bearbeitende Details in einem dargestellten Bild sind vorzugsweise markierbar.

Weist das tragbare Bildsignalbearbeitungsgerät gemäß der Erfindung mehrere Datenträgereinführschlitze auf, dann ist einer dieser Schlitze zum Lesen von Bildsignaldaten oder zum Schreiben von Bildsignaldaten anwählbar.

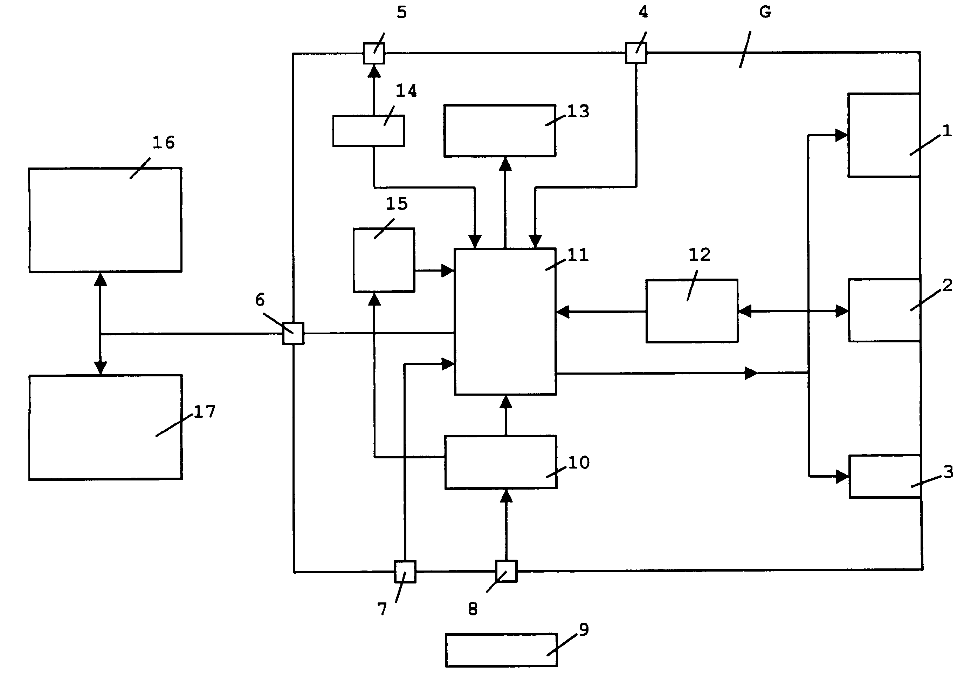

Weitere vorteilhafte Eigenschaften der Erfindung ergeben sich aus deren nachfolgender Erläuterung anhand eines in der Figur dargestellten Ausführungsbeispiels. Die Figur zeigt ein Blockschaltbild eines tragbaren Bildsignalbearbeitungsgerätes gemäß der Erfindung, an welches ein externes Display 16 und ein externer Speicher 17 angeschlossen sind.

Bei diesem Gerät G handelt es sich um ein eigenständiges und kompaktes Gerät, welches vom Benutzer leicht transportierbar ist und am jeweiligen Einsatzort schnell aufgestellt und in den betriebsbereiten Zustand gebracht werden kann. Dieses Gerät ist zur Bearbeitung von Bildsignaldaten vorgesehen, bei denen es sich um digitale, in Pixelform vorliegende Bildsignaldaten handelt. Die den zu bearbeitenden Bildsignaldaten entsprechenden Einzelbilder oder Bildsequenzen werden entweder auf einem geräteinternen Display 13 oder auf einem externen Display 16 dargestellt, welches unter Verwendung eines Kabels an den Ausgang 6 des Gerätes G angeschlossen ist. Der Ausgang G ist beispielsweise eine Scartbuchse, die über ein Scartkabel mit der Scartbuchse eines Fernsehgerätes verbunden ist, auf dessen Bildschirm die Bildsignaldaten angezeigt werden.

Alternativ dazu kann die Kopplung zwischen dem Gerät G und dem externen Display 16 auch unter Verwendung der Bluetooth-Technologie drahtlos erfolgen. Zur Herstellung dieser drahtlosen, über Funk erfolgenden Verbindung wird an einem der Geräte die Funktion "Geräte koppeln" und am anderen Gerät die Funktion "Gerät suchen" aktiviert. Hat das suchende Gerät das gesuchte Gerät entdeckt, dann kann die gewünschte Kopplung bzw. Signalübertragung erfolgen.

Die bearbeiteten Bildsignaldaten können auch über den Ausgang 6 des Gerätes G an einen externen Speicher 17 übertragen und dort abgespeichert werden. Bei diesem externen Speicher kann es sich um einen Festplattenspeicher handeln, der Bestandteil eines an das Gerät G angeschlossenen Fernsehgerätes ist. Auch diese Übertragung kann drahtlos unter Verwendung der Bluetooth-Technologie durchgeführt werden.

Bei den zu bearbeitenden Bildsignaldaten handelt es sich um digitale, in Pixelform vorliegende Bildsignaldaten, die auf einem Datenträger abgespeichert sind. Diese Bildsignaldaten entsprechen Einzelbildern oder Bildsequenzen, die mittels einer Digitalkamera aufgenommen und auf einem in die Digitalkamera eingesetzten Datenträger abgespeichert wurden. Bei dem Datenträger handelt es sich um eine Speicherkarte, beispielsweise eine Smart Media Card, ein Compact Flash, eine Micro Drive bzw. eine Mini-Harddisk, eine Multimediakarte, eine SD-Karte oder ein Memory Stick.

Der Datenträger, auf dem die zu bearbeitenden Bildsignaldaten abgespeichert sind, wird in einen dem vorliegenden Speicherkartentyp zugehörigen Datenträgereinführschlitz 1, 2 oder 3 eingeführt. Ist der Datenträger in den Datenträgereinführschlitz eingesetzt, dann ist die zum Lesen der abgespeicherten Daten erforderliche mechanische und elektrische Kopplung mit dem Gerät G automatisch hergestellt.

Die vom Datenträger gelesenen Daten werden einer Identifikationseinheit 12 zugeführt, die zur Identifizierung des Datenformats der vom Datenträger gelesenen Bildsignaldaten vorgesehen ist. Die vom Datenträger gelesenen Daten weisen eines von mehreren Datenformaten auf. Gemäß einem dieser Formate liegen die Bildsignaldaten unkomprimiert in einem Bitmap-Format vor, wobei jedem Bildpunkt 3 x 8 Bits zugeordnet sind, von denen 8 Bits für die Farbkomponente R, 8 Bits für die Farbkomponente G und 8 Bits für die Farbkomponente B verwendet werden. Gemäß einem zweiten in Frage kommenden Datenformat liegen die Bildsignaldaten komprimiert als JPEG-Datei vor. Gemäß einem dritten möglichen Datenformat liegen die Bildsignaldaten komprimiert als GIF-Datei vor.

Die ermittelte Information über das Datenformat der vom Datenträger gelesenen Bildsignaldaten wird zusammen mit den Bildsignaldaten von der Identifikationseinheit 12 an die Bildsignalbearbeitungseinheit 11 weitergeleitet. In dieser erfolgt - falls notwendig - zunächst eine Dekomprimierung der Bildsignaldaten sowie eine Zwischenspeicherung der zu bearbeitenden Bildsignaldaten in einem Speicher. Dessen Kapazität ist derart bemessen, dass eine Vielzahl von Bildsignaldaten zwischengespeichert werden kann, also eine Vielzahl von Einzelbildern oder Bildsequenzen.

Anschließend wird in der Bildsignalbearbeitungseinheit 11 eine gewünschte Bildsignalbearbeitung durchgeführt. Zu diesem Zweck weist die Bildsignalbearbeitungseinheit 11 Bildsignalverarbeitungsmittel auf, mittels derer gewünschte Bildinhaltsveränderungen vorgenommen werden können.

Eine der genannten Bildinhaltsveränderungen besteht darin, ein Eintasten eines Schriftfeldes oder Schriftzuges in ein vorliegendes Bildsignal vorzunehmen, beispielsweise im Sinne einer Untertitelung von Urlaubsfotos. Eine weitere Bildinhaltsveränderung besteht darin, eine Farbveränderung des vorliegenden Bildsignals durchzuführen, um gewünschte Farbeffekte zu erzielen. Weiterhin kann mittels der Bildbearbeitungsmittel eine Verfremdung eines Bildsignals vorgenommen werden. Eine solche Verfremdung besteht beispielsweise darin, die Nase oder die Ohren einer auf dem Bild befindlichen Person zu vergrößern oder deren Beine zu verlängern, um eine Karikatur zu schaffen.

Eine weitere mögliche Bildinhaltsveränderung besteht in einer Kontrastverstärkung des Bildsignals. Dies ist beispielsweise dann von Vorteil, wenn die aufgenommenen Bilder in einer grauen, dunklen Umgebung aufgenommen wurden und der Kontrast der aufgenommenen Bilder schwach ist. Die Durchführung einer Kontrastverstärkung in einem solchen Bild hebt die im Bild befindlichen Konturen hervor, so dass Bilddetails besser erkennbar werden.

Weiterhin können im Rahmen der Bildbearbeitung auch andere Qualitätsverbesserungen des Bildsignals durchgeführt werden, beispielsweise eine das ganze Bild umfassende Erhöhung der Helligkeit oder eine Kantenversteilerung.

Welche Bildsignalbearbeitung bezüglich des vorliegenden Bildes jeweils gewünscht ist, wird mittels der Bedieneinheit des Gerätes G vorgegeben.

Die Bedieneinheit des in der Figur dargestellten Gerätes G weist einen Fernbedienungsgeber 9 auf, welcher Infrarot-Fernbediensignale an einen Bediensignaleingang 8 des Gerätes G ausstrahlt. Der Bediensignaleingang 8 umfasst einen Infrarot-Empfänger, der die von ihm empfangenen Bedienbefehle an die Steuereinheit 10 des Gerätes G weiterleitet. Diese setzt die eingegebenen Bedienbefehle in Steuersignale für die Bildbearbeitungseinheit 11 um.

Um dem Benutzer die Bedienung des Gerätes G zu erleichtern, wird das geräteinterne Display 13 bzw. das externe Display 16 zur Darstellung von Benutzerführungssignalen verwendet. Diese Benutzerführungssignale werden in Form eines Auswahlmenüs dargestellt, aus welchem der Benutzer mittels Cursorsteuertasten und einer Übernahmetaste der Bedieneinheit 9 einen durchzuführenden Bedienbefehl auswählen kann.

Da eine Auswahl eines durchzuführenden Befehls stets vom Inhalt des zu bearbeitenden Bildsignals abhängig ist, wird das Auswahlmenü auf dem Display in Form eines Menüfeldes in das zu bearbeitende Bild eingeblendet, so dass außer dem eingeblendeten Menüfeld ein wesentlicher Teil des zu bearbeitenden Bildes sichtbar bleibt. Da in vielen Fällen eine gewünschte Bildbearbeitung lediglich einzelne Bilddetails betrifft, beispielsweise eine Kante eines im Bild dargestellten Objekts, ist das gewünschte Bilddetail mittels der Bedieneinheit anwählbar. Diese Anwahl kann ebenfalls unter Verwendung der Cursorsteuertasten oder unter Verwendung einer Bedienmaus erfolgen.

Um eine Anwahl von zu bearbeitenden Bilddetails im dargestellten Bild zu verbessern, ist die Platzierung des in das Bild eingeblendeten Menüfeldes mittels der Bedieneinheit veränderbar. Ist beispielsweise anfänglich das Menüfeld auf der rechten Seite des dargestellten Bildes eingeblendet, dann wird in einem ersten Bearbeitungsschritt zunächst die linke Bildhälfte nach zu bearbeitenden Bilddetails abgesucht, gewünschte Bilddetails markiert und die vorzunehmenden Änderungen durchgeführt. Anschließend wird das Menüfeld auf die linke Seite des dargestellten Bildes verschoben, so dass in einem zweiten Bearbeitungsschritt die rechte Bildhälfte nach zu bearbeitenden Bilddetails abgesucht, gewünschte Bilddetails markiert und die vorzunehmenden Änderungen durchgeführt werden können.

Gemäß einer vorteilhaften Ausgestaltung der Erfindung ist das Display 13 des Gerätes als berührungssensitives Display ausgestaltet. Auf diesem Display können mittels eines Fingers des Benutzers, mittels eines stiftförmigen Gegenstandes oder mittels eines Eingabestiftes im dargestellten Auswahlmenü gewünschte Bedienbefehle markiert und ausgewählt werden. Diese Möglichkeit der Eingabe von Bedienbefehlen über ein berührungssensitives Display kann anstelle einer Bedienbefehleingabe mittels des Fernbedienungsgebers oder auch zusätzlich zu dieser vorgesehen sein.

Das in der Figur dargestellte Gerät G weist weiterhin ein integriertes Modem 14 auf, welches mit einem Telefonanschluss 5 des Gerätes G verbunden ist. Vorzugsweise ist der Telefonanschluss 5 ein ISDN-Anschluss, über welchen das Gerät G mit dem Internet verbindbar ist. Dies eröffnet die Möglichkeit, die bearbeiteten Bilder über das Internet an einen gewünschten Empfänger zu übertragen. Der gewünschte Empfänger kann ein an einem anderen Ort wohnender Familienangehöriger sein, ein Belichtungsservice, der Printabzüge von den bearbeiteten Bildern erstellt, oder ein Archivservice, bei welchem die bearbeiteten Bilder archiviert werden. Weiterhin ist es aufgrund der Internetverbindung möglich, an einem Urlaubsort mittels einer Digitalkamera selbst aufgenommene und mittels des beanspruchten Gerätes selbst bearbeitete Bilder noch am selben Tag vom Urlaubsort aus an daheimgebliebene Familienangehörige zu übersenden.

Ein weiterer Vorteil der Internetverbindung des Gerätes G besteht darin, dass aus dem Internet Bilddaten abgerufen werden können, die in der Bildsignalbearbeitungseinheit 11 dem vom jeweiligen Datenträger abgeleiteten Bildsignal überlagert oder in anderer Weise zugemischt werden können. Ferner können aus dem Internet auch Audiosignale abgerufen werden, die im Gerät G einzelnen Bildern oder Bildsequenzen zugeordnet werden, so dass die bearbeiteten Bilder zusammen mit einem Begleitton wiedergegeben werden können.

Alternativ oder zusätzlich dazu, Audiosignale aus dem Internet abzuleiten, können den bearbeiteten Bildsignalen auch Sprachsignale zugeordnet werden, die dem Gerät G über den Mikrofoneingang 7 des Gerätes zugeführt werden. Dies ermöglicht beispielsweise eine Eingabe von Sprachsignalen, die im Urlaub aufgenommene Bilder kommentieren.
Eine weitere Möglichkeit, Audiosignale in das dargestellte Gerät einzugeben, besteht in der Verwendung des Audiosignaleingangs 4, über welchen das Gerät G mit einem CD-Spieler, einem Kassettenrecorder oder einem anderen Audiosignal-Wiedergabegerät verbunden werden kann.

Weiterhin weist das gezeigte Gerät G einen Ton-Synthesizer 15 auf, welcher von der Steuereinheit 10 angesteuert wird, um synthetisierte Tonsignale zu generieren und an die Bildbearbeitungseinheit 11 auszugeben.

Die bearbeiteten Bildsignale können in einem nichtflüchtigen Speicher des Gerätes G abgespeichert werden, so dass sie von dort wiederholt an verschiedenen Orten dem jeweils vorhandenen Publikum präsentiert werden können. Dies kann unter Verwendung des geräteeigenen Displays 13 oder unter Verwendung eines externen Displays, beispielsweise dem Display eines Fernsehgerätes, erfolgen.

Die bearbeiteten Bildsignale können weiterhin auch einem externen Speicher 17 zugeführt und dort abgespeichert werden, beispielsweise einem Festplattenspeicher eines an das Gerät G angeschlossenen Fernsehgerätes.

Ferner können die bearbeiteten Bildsignale auch von der Bildbearbeitungseinheit 11 an einen Datenträger zurückübertragen werden, der in einen der Datenträgereinführschlitze 1, 2 oder 3 eingesetzt ist, und dort abgespeichert werden.

Vorzugsweise ist dabei mittels der Bedieneinheit derjenige Datenträgerschlitz bzw. Datenträger anwählbar, auf welchem die genannte Abspeicherung der bearbeiteten Bildsignaldaten erfolgen soll. Ferner ist es auch vorteilhaft, mittels der Bedieneinheit einen Datenträgerschlitz bzw. Datenträger anwählen zu können, von welchem ein Lesen von Bildsignaldaten durchgeführt werden soll.

Diese Auswahlmöglichkeit von Datenträgerschlitzen bzw. in diese eingesetzten Datenträgern ermöglicht es, mehrere Datenträger gleichzeitig in das Gerät G einzusetzen und dennoch die Schreib- und Lesevorgänge bezüglich dieser Datenträger definiert vorzunehmen. Beispielsweise können die zu bearbeitenden Bildsignale von einem in den Datenträgerschlitz 1 eingeführten Datenträger gelesen werden und nach der vorgenommenen Bearbeitung sowohl auf dem in den Datenträgerschlitz 2 als auch auf dem in den Datenträgerschlitz 3 eingeführten Datenträger abgespeichert werden.

Ein Gerät gemäß der Erfindung weist vorzugsweise mehrere Möglichkeiten der Spannungsversorgung auf, so dass dessen Einsetzbarkeit an verschiedenen Orten erleichtert ist. Beispielsweise ist das Gerät sowohl an das normale Wechselstromnetz als auch über einen Autoadapter (12V/24V/48V) als auch im Batterie- bzw. Akkubetrieb betreibbar.

Ein Vorteil eines Gerätes gemäß der Erfindung besteht auch darin, dass es ohne PC-spezifische Kenntnisse bedient werden kann. Die notwendige Software des Gerätes ist integrierter Bestandteil des Gerätes und kann bei Bedarf über ein Netzwerk oder einen ladbaren Datenträger aktualisiert werden. Weiterhin erlaubt ein Gerät gemäß der Erfindung ein Zusammenstellen von selbständig ablaufenden, vertonten Bildwiedergabeshows. Dabei treten keine Synchronisationsprobleme zwischen mehreren Geräten auf. Auch für Reporter ist das vorstehend beschriebene Gerät in vorteilhafter Weise einsetzbar, da durch die Möglichkeit eines sofortigen elektronischen Versendens bearbeiteter Bilder eine hohe Aktualität gegeben ist.

### Bezugszeichenliste:

- G: Tragbares Bildsignalbearbeitungsgerät
- 1: Erster Datenträgereinführschlitz
- 2: Zweiter Datenträgereinführschlitz
- 3: Dritter Datenträgereinführschlitz
- 4: Audiosignaleingang
- 5: Telefonanschluss
- 6: Ausgangsbuchse
- 7: Mikrofoneingang
- 8: Bediensignaleingang
- 9: Fernbedienungsgeber
- 10: Steuereinheit
- 11: Signalbearbeitungseinheit
- 12: Identifikationseinheit
- 13: geräteinternes Display
- 14: Modem
- 15: Ton-Synthesizer
- 16: externes Display
- 17: externer Speicher

## Patentansprüche

1. Tragbares Bildsignalbearbeitungsgerät bestehend aus mindestens einem Datenträgereinführschlitz (1,2,3), einer Identifikationseinheit (12) zur Identifizierung des Datenformats der von einem in den mindestens einen Datenträgereinführschlitz (1,2,3) des tragbaren Bildsignalbearbeitungsgerätes eingeführten Datenträger gelesenen Bildsignaldaten und einer Signalbearbeitungseinheit (11) zur Bearbeitung der gelesenen Bildsignaldaten, wobei das Bildsignalbearbeitungsgerät ein Datenfernübertragungsmodul (14) und eine Ausgangsbuchse (6) aufweist, an welche ein externes Display (16) oder ein externer Speicher (17) anschließbar sind
**dadurch gekennzeichnet, dass**
die Bildsignaldaten unkomprimiert in Form eines Bitmaps vorliegen, wobei jedem Bildpunkt 3 x 8 Bits zugeordnet sind, von denen jeweils 8 Bits für die Farbkomponente rot, 8 Bits für die Farbkomponente grün und 8 Bits für die Farbkomponente blau verwendet sind, das von der Identifikationseinheit (12) ermittelte Datenformat von eingelesenen Bildsignaldaten zusammen mit den Bildsignaldaten an die Bildbearbeitungseinheit (11) gesendet wird, und mittels der Bildbearbeitungseinheit (11) in das Bildsignal ein Eintasten eines Schriftfeldes ermöglicht ist, eine Auswahl von auszuführenden Bedienbefehlen in Abhängigkeit des zu bearbeitenden Bildsignales von der Bildbearbeitungseinheit (11) bereit gestellt ist und die Bereitstellung und Einblendung in das Bild derart erfolgt, dass wesentliche Teile des zu bearbeitenden Bildes sichtbar bleiben und einzelne Bilddetails eines im Bild dargestellten Objektes, welches Bestandteil der Bildsignaldaten ist, über das Menü anwählbar sind und ein internes Display (13) vorhanden ist, welches ein berührungssensitives Display ist.

2. Tragbares Bildsignalbearbeitungsgerät nach Anspruch 1,
**dadurch gekennzeichnet, dass**
das Datenfernübertragungsmodul (14) ein Modem ist und das Modem mit einem Telefonanschluss (5) verbindbar ist, oder dass das Datenfernübertragungsmodul (14) eine Bluetooth-Schnittstelle besitzt, mittels derer per Funkfrequenzen das Datenfernübertragungsmodul über das (14) Modem mit dem Telefonanschluss (5) verbindbar ist.

3. Tragbares Bildsignalbearbeitungsgerät nach Anspruch 1 oder 2,
**dadurch gekennzeichnet, dass**
die Bildsignalbearbeitungseinheit (11) einen Bildsignaldaten-Dekomprimierer aufweist und/oder die Bildsignalbearbeitungseinheit (11) Speichermittel aufweist, die zur Abspeicherung einer Vielzahl von Bildsignaldaten dienen.

4. Tragbares Bildsignalbearbeitungsgerät nach einem der vorhergehenden Ansprüche,
**dadurch gekennzeichnet, dass**
die Bildsignalbearbeitungseinheit (11) Bildsignalbearbeitungsmittel enthält, mittels derer eine Bildinhaltsveränderung und/oder ein Eintasten eines Schriftfeldes oder Schriftzuges in ein Bildsignal durchführbar ist und/oder eine Farbveränderung eines Bildsignals und/oder eine Verfremdung eines Bildsignals und/oder eine Kontrastverstärkung eines Bildsignals und/oder eine Qualitätsverbesserung eines Bildsignals durchführbar ist.

5. Tragbares Bildsignalbearbeitungsgerät nach einem der vorhergehenden Ansprüche,
**dadurch gekennzeichnet, dass**
es eine Bedieneinheit (9) aufweist, mittels derer Bedienbefehle eingebbar sind, die eine gewünschte Bildsignalbearbeitung spezifizieren und/oder es eine Steuereinheit (10) aufweist, die mittels der Bedieneinheit (9) eingegebene Bedienbefehle in Steuersignale für die Bildsignalbearbeitungseinheit (11) umsetzt und/oder es einen mit der Steuereinheit (10) verbundenen Ton-Synthesizer (15) aufweist, welcher Ausgangssignale an die Signalbearbeitungseinheit (11) liefert.

6. Tragbares Bildsignalbearbeitungsgerät nach einem der vorhergehenden Ansprüche,
**dadurch gekennzeichnet, dass**
es einen Mikrofoneingang (7) aufweist und/oder es einen Audiosignaleingang (4) aufweist.

7. Tragbares Bildsignalbearbeitungsgerät nach einem der vorhergehenden Ansprüche
**dadurch gekennzeichnet, dass**
mindestens eines der Displays (13, 16) ein berührungssensitives Display ist, durch dessen Berührung Bediensignale eingebbar sind.

8. Tragbares Bildsignalbearbeitungsgerät nach einem der vorhergehenden Ansprüche,
**dadurch gekennzeichnet, dass**
das geräteinterne Display (13) und/oder das externe Display (16) zur Darstellung von Benutzerführungssignalen vorgesehen ist und/oder die Benutzerführungssignale in Form eines Auswahlmenüs dargestellt werden, aus welchem mittels der Bedieneinheit durchzuführende Bedienbefehle auswählbar sind und/oder die Benutzerführungssignale in Form einer Einblendung in oder einer Überlagerung zu einem zu bearbeitenden Bild darstellbar sind

9. Tragbares Bildsignalbearbeitungsgerät nach Anspruch 8,
**dadurch gekennzeichnet, dass**
die Platzierung der Benutzerführungssignale auf dem Display mittels der Bedieneinheit veränderbar ist.

10. Tragbares Bildsignalbearbeitungsgerät nach einem der vorhergehenden Ansprüche,
**dadurch gekennzeichnet, dass**
mittels der Bedieneinheit zu bearbeitende Details in einem dargestellten Bild markierbar sind und/oder mittels der Bedieneinheit einer der Datenträgereinführschlitze anwählbar ist und/oder mittels der Bedieneinheit einer der Datenträgereinführschlitze zum Lesen von Bildsignaldaten von einem in den Datenträgereinführschlitz eingeschobenen Datenträger anwählbar ist und/oder mittels der Bedieneinheit einer der Datenträgereinführschlitze zum Schreiben von Bildsignaldaten auf einen in den Datenträgereinführschlitz eingeschobenen Datenträger anwählbar ist.

11. Tragbares Bildsignalbearbeitungsgerät nach einem der vorhergehenden Ansprüche,
**dadurch gekennzeichnet, dass**
die Datenträgereinführschlitze jeweils zur Aufnahme einer Speicherkarte vorgesehen sind.

## Claims

1. Portable image signal editing device consisting of at least one data medium insertion slot (1, 2, 3), an identification unit (12) to identify the data format of the image signal data which are read from the data medium which is inserted into the at least one data medium insertion slot (1, 2, 3) of the portable image signal editing device, and a signal editing unit (11) for editing the read image signal data, the image signal editing device having a remote data transmission module (14) and an output socket (6), to which an external display (16) or an external memory (17) can be connected,
**characterized in that**
the image signal data are present uncompressed in the form of a bit map, 3 x 8 bits being assigned to each pixel, 8 bits being used for the colour component red, 8 bits for the colour component green, and 8 bits for the colour component blue, that the data format determined by the identification unit (12) for read-in image signal data is sent to the image editing unit (11) together with the image signal data, and that scanning a title block into the image signal is made possible by means of the image editing unit (11), that a selection of operating commands to be executed is provided by the image editing unit (11) depending on the image signal to be edited, and that the provision and insertion into the image take place in such a way that essential parts of the image to be edited remain visible, and that individual image details of an object which is shown in the image and is part of the image signal data can be selected via the menu, and that an internal display (13), which is a touch-sensitive display, is present.

2. Portable image signal editing device according to Claim 1,
**characterized in that**
the remote data transmission module (14) is a modem, and the modem can be connected to a telephone connection (5), or that the remote data transmission module (14) has a Bluetooth interface, by means of which the remote data transmission module (14) can be connected by radio frequencies via the modem to the telephone connection (5).

3. Portable image signal editing device according to Claim 1 or 2,
**characterized in that**
the image signal editing unit (11) has an image signal data decompressor, and/or the image signal editing unit (11) has storage means which are used to store multiple image signal data.

4. Portable image signal editing device according to one of the preceding claims,
**characterized in that**
the image signal editing unit (11) contains image signal editing means, by means of which a change of the image content and/or scanning a text block or lettering into an image signal can be carried out, and/or a colour change of an image signal and/or obscuration of an image signal and/or contrast amplification of an image signal and/or quality improvement of an image signal can be carried out.

5. Portable image signal editing device according to one of the preceding claims,
**characterized in that**
it has an operating unit (9), by means of which operating commands which specify desired image signal editing can be entered, and/or it has a control unit (10), which converts operating commands which are entered by means of the operating unit (9) into control signals for the image signal editing unit (11), and/or it has a sound synthesiser (15) which is connected to the control unit (10), and which supplies output signals to the signal editing unit (11).

6. Portable image signal editing device according to one of the preceding claims,
**characterized in that**
it has a microphone input (7) and/or an audio signal input (4).

7. Portable image signal editing device according to one of the preceding claims,
**characterized in that**
at least one of the displays (13, 16) is a touch-sensitive display, by touching which operating signals can be entered.

8. Portable image signal editing device according to one of the preceding claims,
**characterized in that**
the device-internal display (13) and/or the external display (16) is provided for showing user guidance signals, and/or the user guidance signals are shown in the form of a selection menu, from which, by means of the operating unit, operating commands to be executed can be selected, and/or the user guidance signals can be shown in the form of an insertion into or overlay onto an image to be processed.

9. Portable image signal editing device according to Claim 8,
**characterized in that**
the placing of the user guidance signals on the display can be changed by means of the operating unit.

10. Portable image signal editing device according to one of the preceding claims,
**characterized in that**
by means of the operating unit, details to be edited can be marked in a shown image, and/or by means of the operating unit, one of the data medium insertion slots can be selected, and/or by means of the operating unit, one of the data medium insertion slots can be selected for reading image signal data from a data medium which is inserted into the data medium insertion slot, and/or by means of the operating unit, one of the data medium insertion slots can be selected for writing image signal data to a data medium which is inserted into the data medium insertion slot.

11. Portable image signal editing device according to one of the preceding claims,
**characterized in that**
the data medium insertion slots are each provided for receiving a memory card.

## Revendications

1. Dispositif portatif de traitement de signal d'image comportant au moins une fente d'insertion de support de données (1, 2, 3), une unité d'identification (12) pour identifier le format de données des données de signal d'images lues par un support de données inséré dans la au moins une fente d'insertion de support de données (1, 2, 3) du dispositif portatif de traitement de signal d'image et une unité de traitement de signal (11) pour traiter les données de signal d'image lues, dans lequel le dispositif de traitement de signal d'image présente un module de télétransmission de données (14) et une prise de sortie (6), à laquelle un affichage externe (16) ou une mémoire externe (17) peuvent être reliés,
**caractérisé en ce que**
les données de signal d'image non compressées se présentent sous la forme d'un bitmap, où à un chaque point d'image 3x8 bits sont associés, parmi lesquels respectivement 8 bits sont utilisés pour la composante de couleur rouge, 8 bits sont utilisés pour la composante de couleur verte et 8 bits pour la composante de couleur bleue, le format de données déterminé par l'unité d'identification (12) dès données de signal d'image entrées est envoyé conjointement avec les données de signal d'image à l'unité de traitement d'images (11), et grâce à l'unité de traitement d'images (11) une saisie de champ d'écriture est possible dans le signal d'image, une sélection d'instructions à effectuer selon le signal d'image à traiter par l'unité de traitement d'images (11) est disponible et la délivrance et l'incrustation dans l'image se produisent de sorte que des parties essentielles de l'image à traiter restent visibles et des détails particuliers d'un objet sont représentés dans l'image, qui est un composant des données de signal d'image, peuvent être choisis grâce au menu et il existe un affichage interne (13), qui est un affichage tactile.

2. Dispositif portatif de traitement de signal d'image selon la revendication 1, **caractérisé en ce que**
le module de télétransmission de données (14) est un modem et le modem peut être relié à une prise téléphonique (5), ou **en ce que** le module de télétransmission de données (14) possède une interface bluetooth, grâce à laquelle le module de télétransmission de données (14) peut être relié à la prise téléphonique (5) par l'intermédiaire du modem par fréquences radio.

3. Dispositif portatif de traitement de signal d'image selon la revendication 1 ou 2, **caractérisé en ce que**
l'unité de traitement de signal d'image (11) présente un dispositif de décompression de données de signal d'image et/ou l'unité de traitement de signal d'image (11) présente des mémoires, qui sont utilisées pour le stockage d'une pluralité de données de signal d'image.

4. Dispositif portatif de traitement de signal d'image selon l'une des revendications précédentes, **caractérisé en ce que**
l'unité de traitement de signal d'image (11) comporte des moyens de traitement de signal d'image, grâce auxquels un changement du contenu de l'image et/ou une saisie d'un champ d'écriture ou d'une chaîne d'écriture peuvent être effectués dans un signal d'image et/ou un changement de couleur d'un signal d'image et/ou un éloignement d'un signal d'image et/ou une intensification du contraste de signal d'image et/ou une amélioration de la qualité de signal d'image peuvent être effectués.

5. Dispositif portatif de traitement de signal d'image selon l'une des revendications précédentes, **caractérisé en ce que**
il présente une télécommande (9), grâce à laquelle des instructions de fonctionnement peuvent être saisies, qui spécifient un traitement de signal d'image désiré et/ou il présente une unité de commande (10), qui convertit grâce à la télécommande (9) les instructions de fonctionnement saisies en signaux de commande pour l'unité de traitement de signal d'image (11) et/ou il présente un synthétiseur de son (15) relié à l'unité de commande (10), qui délivre des signaux de sortie à l'unité de traitement de signal (11).

6. Dispositif portatif de traitement de signal d'image selon l'une des revendications précédentes, **caractérisé en ce que**
il présente une entrée de microphone (7) et/ou il présente une sortie de signal audio (4).

7. Dispositif portatif de traitement de signal d'image selon l'une des revendications précédentes, **caractérisé en ce que**
au moins un des affichages (13, 16) est un affichage tactile, grâce auquel des signaux de commande peuvent être saisis en le touchant.

8. Dispositif portatif de traitement de signal d'image selon l'une des revendications précédentes, **caractérisé en ce que**
l'affichage interne (13) et/ou l'affichage externe (16) sont prévus pour l'affichage de signaux de guidage d'utilisateur et/ou les signaux de guidage d'utilisateur sont affichés sous la forme d'un menu de sélection, à partir duquel des instructions de fonctionnement à effectuer grâce à la télécommande peuvent être sélectionnées et/ou les signaux de guidage d'utilisateur peuvent être affichés sous la forme d'une incrustation ou d'une superposition par rapport à une image à traiter.

9. Dispositif portatif de traitement de signal d'image selon la revendication 8, **caractérisé en ce que**
l'emplacement des signaux de guidage d'utilisateur sur l'affichage peut être modifié grâce à la télécommande.

10. Dispositif portatif de traitement de signal d'image selon l'une des revendications précédentes, **caractérisé en ce que**
des détails à traiter grâce à la télécommande peuvent être repérés dans une image affichée et/ou grâce à la télécommande une des fentes d'insertion de support de données peut être sélectionnée et/ou grâce à la télécommande une des fentes d'insertion de support de données peut être sélectionnée pour la lecture des données de signal d'image par un support de données inséré dans la fente d'insertion de support de données et/ou grâce à la télécommande une des fentes d'insertion de support de données peut être sélectionnée pour l'écriture de données de signal d'image sur un support de données inséré dans la fente d'insertion de support de données.

11. Dispositif portatif de traitement de signal d'image selon l'une des revendications précédentes, **caractérisé en ce que**
les fentes d'insertion de support de données sont prévues respectivement pour la réception d'une carte mémoire.
